# EUROPEAN PATENT SPECIFICATION

(11) **EP 1 886 576 B1**
(45) Date of publication and mention of the grant of the patent: **12.12.2012**
(21) Application number: 06746785.2
(22) Date of filing: 24.05.2006
(51) Int. Cl.: A23F 5/02

(54) **METHOD OF TREATING GREEN COFFEE BEANS UNDER pH REGULATION**
VERFAHREN ZUR BEHANDLUNG VON GRÜNEN KAFFEEBOHNEN UNTER REGULATION DES PH-WERTS
PROCEDE DE TRAITEMENT DES GRAINS DE CAFÉ VERTS SOUS REGLAGE DU pH

(30) Priority: 25.05.2005 JP 2005153118
(43) Date of publication of application: 13.02.2008
(73) Proprietor: Suntory Holdings Limited, Kita-ku, Osaka-shi, Osaka 530-8203 (JP)
(72) Inventor: NAKAJIMA, Toshiharu, Tokyo 1830006 (JP); YOMO, Hideko, Toyonaka-shi Osaka 5600082 (JP)
(74) Representative: Vossius & Partner
(86) International application number: PCT/JP2006/310352
(87) International publication number: WO 2006/126587

(56) References cited:
- EP-A2- 0 282 762
- WO-A1-2005/029969
- JP-A- 01 112 950
- JP-A- 09 502 099
- HIKAWA Y. ET AL.: 'Kakushu Wine Jozoyo Kobo no Wine Jozo Tokusei' REPORT OF THE YAMANASHI INDUSTRIAL TECHNOLOGY CENTER no. 18, 2004, pages 141 - 144, XP003006992
- BETANCOURT L.E. ET AL.: 'Bedingungen des mikrobiellen Verderbs von gruenem Kaffee. 1. Mitteilung: Sorptionsverhalten und Schinmelbildung' DUTSCH LEBENSM RUNDSCH vol. 79, no. 11, 1983, pages 366 - 369, XP002984299
- AVALLONE S. ET AL.: 'Fate of Mucilage Cell Wall Polysaccharides during Coffee Fermentation' J. AGRIC. FOOD CHEM. vol. 49, no. 11, 2001, pages 5556 - 5559, XP002984300
- NAITO M. ET AL.: 'Anti-Atherogenic Effect of Fermented Fresh Coffee Bean, Soybean and Rice Bran Extracts' FOOD SCI. TECHNOL. RES. vol. 9, no. 2, 2003, pages 170 - 175, XP003006993

## Description

### TECHNICAL FIELD

The present invention relates to a method of treating green coffee beans comprising a fermenting step for performing fermentation by bringing a nutritive substance and a fermenting microorganism into contact with one another and then supplying the fermented components thus formed to green coffee beans.

### BACKGROUND ART

There follows a brief description of the steps for manufacturing a coffee drink. The outer skin and pulp portions are first removed from coffee cherry (the cherry of a plant of the Rubiaceae called "coffee tree"), and green coffee beans are isolated (refining step). The resulting green coffee beans are roasted, whereby roasted coffee beans are obtained (roasting step). The components that are the basis of the taste and aroma characteristic of coffee (referred to below as "coffee flavor and aroma components") are generated in this roasting step. The roasted coffee beans are then ground, and an extract containing coffee flavor and aroma components extracted using boiling water or the like is provided as a coffee drink.
The demand for coffee drinks as a beverage of choice is currently increasing, and the preferences of consumers for coffee drinks are also diversifying. A variety of improvements in coffee flavor and aroma are needed.
One method for improving coffee flavor and aroma in order to address such consumer demands involves implementing a fermentation treatment in which green coffee beans, microorganisms (yeast or the like), and substance to be metabolized using the microorganisms are brought into contact with one another. The alcohols and esters produced by the fermentation of the microorganisms are absorbed by the green coffee beans, which are separated, recovered, and roasted. Coffee drinks are manufactured using these roasted coffee beans as a raw material (see Patent Document 1).
In the method disclosed in the aforedescribed Patent Document 1, unique aromas that are called "brewed aromas" and that result from alcohols, esters, and other compounds are imparted to the green coffee beans after fermentation. The coffee drink obtained after roasting these green coffee beans has full-bodied taste body (displaying richness, drinkability, and a full flavor) in addition to the aforementioned brewed aroma, allowing a coffee drink to be manufactured having new and favorable flavor and aroma.
[Patent Document 1] International Application Laid-Open No. WO2005/029969A1

### DISCLOSURE OF THE INVENTION

### Problems That the Invention Is Intended to Solve

However, problems of contamination due to bacteria or the like living in the coffee cherry have arisen in this method when implementing the fermentation treatment using microorganisms. Particularly when contaminated by bacteria having the ability to produce acetic acid (e.g., acetic acid bacteria), the green coffee beans will absorb the acetic acid produced by the contaminating bacteria, and the quality of the flavor and aroma of the coffee drink obtained from the roasted coffee beans may decline significantly.

The present invention was devised in light of these problems and provides a method of treating green coffee beans that can prevent contamination by acetic-acid producing bacteria when implementing a fermentation treatment on green coffee beans using microorganisms and that can impart new and favorable flavor and aroma to a coffee drink.

### Means for Solving the Problems

A first characteristic configuration of the present invention is a method of treating green coffee beans, comprising a fermenting step for performing fermentation by bringing a nutritive substance and a fermenting microorganism into contact with one another and then supplying the fermented components thus formed to green coffee beans, wherein, in the fermenting step, with using at least one from amoug ladic acid and phosparie acid as a pH-regulating agent, a pH range is regulated to a pH range of pH 2.4 to 4.7 for inhibiting the growth of acetic-acid producing microorganisms and the nutritive substance and the fermenting microorganism are brought into contact with one another.

The green coffee beans (seeds) are present in the innermost part of the coffee cherry and have the property of absorbing water in preparation for sprouting. Certain types of microorganisms are well-known for degrading (fermenting) organic compounds (nutritive substance) and producing alcohols, organic acids, esters, and other compounds (referred to below as "fermented components"). These microorganisms are typified by yeast and the like.
Therefore, when fermentation is performed using these types of microorganisms (fermenting microorganisms) in the presence of nutritive substance, the fermented components that are produced will be absorbed by the green coffee beans along with water. As a result, the resulting green coffee beans are roasted, whereby roasted coffee beans can be obtained having new flavor and aroma components that originate from the fermented components produced by fermentation in addition to the conventional coffee flavor and aroma components generated in the roasting step, and new and favorable flavor and aroma are imparted to the coffee drink resulting from performing extraction on these roasted coffee beans.

Therefore, according to the first characteristic configuration of the present invention, in the fermenting step, the nutritive substance and the fermenting microorganism are brought into contact with one another in a pH range (referred to below as the "growth-inhibiting pH") for inhibiting the growth of acetic-acid producing microorganisms (referred to below as "acetic-acid producing bacteria"), and therefore the production of acetic acid during the fermentation can be limited. The utilization efficiency of the nutritive substance by the fermenting microorganism will increase to the extent that the waste of nutritive substance due to the acetic-acid producing bacteria is minimized, and the production volume of the fermented components, which impart new and favorable flavor and aroma to the coffee drink, can be increased. As a result, the amount of fermented components can be increased relative to the green coffee beans obtained in the aforedescribed prior art, the amount of acetic acid will be relatively low, and green coffee beans of a higher quality can be obtained.

In a second characteristic configuration of the present invention, the green coffee beans are in at least one state from among a state of isolation from coffee cherry or a state of being inside the coffee cherry.

According to the second characteristic configuration of the present invention, when the fermenting step is performed when the green coffee beans have been subjected to a refining treatment or the like and are in a state of isolation from the coffee cherry, as in Example 1, which is described hereinafter, another type of fruit or fruit juice can be used as the nutritive substance, the sequence when bringing the nutritive substance, the fermenting microorganism, the green coffee beans into contact with one another can be changed as appropriate, and other types of settings may be selected, for example. Alternatively, when the fermenting step is performed when the green coffee beans are within the coffee cherry, as in Examples 2 through 4, fermentation due to microorganisms occurs in a state in which the green coffee beans and the coffee pulp that is the nutritive substance are in proximity to one another. The alcohols, esters, and other fermented components that are generated by fermentation can therefore be more readily transferred to the green beans.

In the present invention, the pH is pH 2.4 to 4.7.

Setting a pH of 2.4 to 4.7 according to the present invention allows the growth of acetic-acid producing bacteria to be limited, and the growth of fermenting microorganisms to be promoted.

The present invention comprises a pH-regulating step for using a pH-regulating agent and regulating the pH to within the aforementioned range.

The method of treating green coffee beans according to the present invention comprises a pH-regulating step. A pH-regulating agent is used in this step, whereby the pH when bringing the fermenting microorganism and nutritive substance into contact with one another can be readily regulated to the growth-inhibiting pH. The pH-regulating step is preferably performed before the initiation of the fermenting step. The pH-regulating step can be implemented in a variety of aspects, as is made clear from the descriptions in the examples described hereinafter. For example, a suspension in which a fermenting microorganism is suspended at a small concentration in a relatively large volume of water (e.g., an amount corresponding to approximately the same weight as the coffee cherry) is prepared, the pH-regulating agent is added to the suspension, and the pH of the suspension is regulated to the growth-inhibiting pH. Next, the coffee cherry to be fermented is brought into contact by being soaked within the suspension and then removed, after which the fermenting step can be implemented (the primary nutritive substance in this instance is the pulp of the coffee cherry).
Alternatively, when the coffee cherry is immersed in a vat of water and impurities are removed in a refining step involving washing with water for separating and refining the green coffee beans from the coffee cherry, the vat of water is prepared so that the pH-regulating agent is added beforehand and the vat has been regulated to growth-inhibiting pH. The harvested coffee cherry and the fermenting microorganism can be added to this vat of water, and the fermenting step can be implemented (the primary nutritive substance in this instance is the pulp of the coffee cherry).

In the present invention, the pH-regulating agent is at least one from among lactic acid and phosphoric acid.

According to the present invention, at least lactic acid or phosphoric acid is used as the pH-regulating agent. The pH of the fermentation liquid is lowered to a pH capable of inhibiting the growth of acetic-acid producing bacteria (the growth-inhibiting pH). The fact that at least lactic acid or phosphoric acid are particularly effective for inhibiting the growth of acetic-acid producing bacteria and do not have any adverse effects on the quality of the green coffee beans after fermentation was first discovered as a result of the thorough research of the present inventors. Lactic acid and phosphoric acid are also inexpensive and readily obtainable. The compounds are used as food additives and therefore are safe and do not harm the body.

In a sixth characteristic configuration of the present invention, the fermenting microorganism is of at least one type selected from among the group composed of yeast, lactic acid bacteria, and Deuteromycota.

In the method of treating green coffee beans according to the sixth characteristic configuration of the present invention, at least one type of microorganism selected from among the group composed of yeast, lactic acid bacteria, and Deuteromycota is used as the fermenting microorganism. These microorganisms are readily obtained and are easily handled due to the ability to apply general methods of culturing, storage, and the like.

In a seventh characteristic configuration of the present invention, the yeast is a wine-fermenting yeast.

In the method of treating green coffee beans according to the seventh characteristic configuration of the present invention, a wine-fermenting yeast is used as the fermenting microorganism. A characteristic brewed aroma can therefore be imparted to the green coffee beans. By using these green coffee beans as a raw material, a coffee drink can be obtained having a fruity brewed aroma and a full-bodied taste in addition to the conventional coffee flavor and aroma generated in the roasting step.

In an eighth characteristic configuration of the present invention, the Deuteromycota belongs to the genus Geotrichum.

In the method of treating green coffee beans according to the eighth characteristic configuration of the present invention, the fermentation treatment is performed using, e.g., Geotrichum candidum, Geotrichum rectangulatum, or Geotrichum klebahnii as the Deuteromycota belonging to the genus Geotrichum. New flavor and aroma components (fermented components) can be imparted to the green coffee beans according to the present method. By using as a raw material the green coffee beans obtained using the aforementioned microorganisms in particular, a coffee drink can be obtained providing a full-bodied taste and having a fruity and rich estery aroma (in which alcohol smells are limited) balanced with the conventional coffee flavors and aromas generated in the roasting step.

In a ninth characteristic configuration of the present invention, the Deuteromycota belonging to the genus Geotrichum is Geotrichum sp. SAM2421 (international deposit number FERM BP-10300), a variant thereof, or a transformant thereof.

In the method of treating green coffee beans according to the ninth characteristic configuration of the present invention, Geotrichum sp. SAM2421 (international deposit number FERM BP-10300) ("SAM2421") is used. SAM2421 is a novel microorganism that was separated from coffee cherry by the present inventors. This microorganism was accepted into the International Patent Organism Depository of the National Institute of Advanced Industrial Science and Technology (#6 Chuo 1-1-1 Tsukuba-shi-higashi Ibaraki-ken Japan) on March 22, 2005. By using SAM2421, new flavor and aroma components (fermented components) are imparted to the green coffee beans, and a coffee drink can be obtained having a more fruity and rich estery aroma and providing a full-bodied taste. SAM2421, variants thereof, or transformants thereof may be used as appropriate in the present invention. Variants include, e.g., strains having spontaneous mutations and strains in which mutation is artificially induced (that are treated with radiation or mutagens), while transformants include, e.g., SAM2421 or variants thereof into which foreign genes have been introduced. Strains having better fermentative ability (or having other characteristics such as easy handling) can be separated from these variants and transformants and put to use.

In a tenth characteristic configuration of the present invention, the nutritive substance is fruit juice or coffee pulp.

According to the tenth characteristic configuration of the present invention, grape juice, peach juice, apple juice, or another juice may be utilized when using fruit juice as the nutritive substance. The coffee pulp (the portions containing sugar and other nutrients) is a by-product obtained in the refining step for obtaining green coffee beans from coffee cherry. The coffee pulp is usually destroyed but can be effectively utilized as a nutritive substance in the present invention. The preparation of foreign nutritive substance is therefore unnecessary, and concerns about increased cost of raw materials are also alleviated.

An eleventh characteristic configuration of the present invention is green coffee beans obtained using the method of treating green coffee beans according to the first or second characteristic configuration.

The green coffee beans according to the eleventh characteristic configuration of the present invention contain fermented components that impart new and favorable flavor and aroma to a coffee drink.

Herein disclosed are further roasted coffee beans resulting from roasting the green coffee beans according to the eleventh characteristic configuration.

The roasted coffee beans contain new flavor and aroma components originating from the fermented components produced by fermentation in addition to the conventional coffee flavor and aroma components generated in the roasting step.

Moreover, herein disclosed is a coffee drink obtained using the roasted coffee beans as a raw material.

The coffee drink has new and favorable flavor and aroma originating from the fermented components produced by fermentation in addition to the conventional coffee flavor and aroma.

### BEST MODE FOR CARRYING OUT THE INVENTION

Embodiments of the present invention will be described below.

### [Embodiments]

### (Coffee Cherry)

"Coffee cherry" in the present invention refers to the cherry of the coffee tree. The general structure of a coffee cherry is composed of green coffee beans (seeds), pulp (the portions containing sugar and other nutrients), and an outer skin. To be more specific, the green coffee beans are present in the innermost part and are surrounded in order by the silver skin, the parchment, the pulp, and the outer skin. Arabica, robusta, liberica, and the like may be used as appropriate as the variety of coffee. The area of production may be Brazil, Ethiopia, Vietnam, Guatemala, or another location as appropriate, but the area of production is not particularly limited. Dried and undried coffee cherries can be used in the present embodiment. The weight ratios per cherry, where green coffee bean is 1, are 6:4:1 of coffee cherry (undried): dried coffee cherry: green coffee bean.

### (Green Coffee Beans)

Two types of formats, i.e., "Natural" and "Washed", are well-known for the refining step for isolating the green coffee beans from the coffee cherry.
"Natural" is a method for obtaining green coffee beans in which the dried portions are stripped from the coffee cherry after harvesting, and the outer skin, pulp, parchment, silver skin, and the like are removed.
"Washed" is a method for obtaining green coffee beans in which the coffee cherry is soaked in a vat of water after harvesting, impurities are removed, and the outer skin and pulp are removed using a pulp-removing machine, after which the coffee cherry is immersed in water, and glutinous materials are dissolved and removed. The dried portions are then stripped after washing with water, and the parchment and silver skin are removed.
The operations of "Natural" step are simple, but this format is primarily applied in regions having a dry climate. On the other hand, "Washed" refining step is primarily applied in regions having frequent rainfall. One or two coffee beans are extracted from one coffee cherry.

### (Nutritive Substance)

Examples of the nutritive substance used in the fermenting step in the present invention include fruit pulp, fruit juices, sugars, grains, and culture media, but the nutritive substance is preferably fruit juice or coffee pulp. However, for the sake of convenience, "coffee pulp" in the present invention refers to all of the portions of the coffee cherry (both dried and undried) other than the green coffee beans and the outer skin.

The coffee pulp that is used may be that of coffee cherry that has not been subjected to a refining step (a knife or the like may also be used to damage the surface and partially expose the pulp as necessary), or, alternatively, pulp obtained when separating out the green coffee beans in the refining step may be used. The coffee pulp may be dried or undried. Not only coffee pulp, but grape pulp, cherry pulp, peach pulp, or other fruit pulp can be used as necessary. Coffee pulp as well as these fruit pulps can be used alone or in any desired combination.

Fruit juice (e.g., grape, peach, or apple), sugars (e.g., monosaccharides, disaccharides, and polysaccharides from sugarcane, sweet potatoes, or other plants), grains (e.g., wort resulting from the glycosylation of malt), and culture media may be given as examples of nutritive substance other than the aforedescribed fruit pulps, but the nutritive substance is not particularly limited as long as the material can be metabolized by the microorganism. Coffee pulp as well as these nutritive substances can be used alone or in any desired combination.

### (Coffee Pulp Exposure Method)

When the coffee cherry is used directly and the coffee pulp within is employed as the nutritive substance, a method for exposing the coffee pulp on at least a part of the surface of the coffee cherry is ideal in order to increase the rate of fermentation.

The method for exposing the coffee pulp may involve damaging the harvested coffee cherry using a sharp blade or the like, or the coffee cherry may be subjected to pressure using a threshing apparatus or the like so that openings are cut in the outer skin, but the damage must not extend to the green coffee beans within. A peeling machine or the like may also be used so that only the outer skin of the coffee cherry is peeled and the pulp is exposed. The aforedescribed operations for exposing the pulp are not particularly necessary when the coffee cherry is accidentally damaged and at least part of the pulp exposed during harvesting. The aforedescribed operations for exposing the pulp are also not particularly necessary when the coffee pulp obtained when separating out the green coffee beans in the refining step is used, and fermentation is performed with the green coffee beans added separately.

### (Fermenting Microorganism)

The fermenting microorganism used in the present invention is not particularly limited as long as the microorganism is capable of metabolizing (fermenting) nutritive substances such as those described above at the growth-inhibiting pH (i.e., the microorganism is acid-resistant).
Yeast, lactic-acid bacteria, and Deuteromycota are specific examples of the microorganism. These microorganisms can be ideally used due to being readily acquired and handled.
As for yeast, brewing yeasts such as wine-fermenting yeasts and beer-fermenting yeasts that have a history of use in food products can be ideally used from the perspective of food safety. The wine-fermenting yeast used may be, e.g., the Lalvin L2323 strain (referred to below as L2323, obtained from the Sceti Company) or the CK S102 strain (referred to below as S102, obtained from Bio Springer), which are commercial dried yeasts. L2323 is usually used for brewing red wine, and S102 is usually used for brewing rosé wines. A characteristic brewed aroma can be added when such yeasts are used.

Well-known bacteria used in the manufacture of fermented milk, lactic-acid bacteria beverages, cheese-fermented milk, and other products may be applied as the lactic-acid bacteria. Lactic-acid bacteria of the genus Lactobacillus are an ideal example.

Examples of Deuteromycota include members of the genus Geotrichum; e.g., Geotrichum candidum, Geotrichum rectangulatum, Geotrichum klebahnii, and, more preferably, Geotrichum sp. SAM2421 (international deposit number FERM BP-10300), or variants and transformants thereof.

Examples of sources from which microorganisms belonging to the genus Geotrichum can be isolated include soil, plants, air, fiber, wood, house dust, animal feed, rivers, silage, food, fruit, grain, fertilizer, factory wastewater, compost, excrement, and the alimentary canal, but cherry (coffee cherry) is preferable.

Examples of the method of isolation include stirring coffee cherry in sterilized water, culturing the supernatant applied on an agar medium containing appropriate antibiotics, and isolating the colonies that are produced, but the microorganisms may also be purchased directly from an appropriate fungus-storing facility or the like.

Variants in the present invention include strains having spontaneous mutations and strains obtained by artificially inducing mutations (using treatments with radiation, mutagens, or the like) in which the DNA-base sequence has changed relative to the wild-type Geotrichum sp. SAM2421 (international deposit number FERM BP-10300)).

### (1) Spontaneous mutation

Mutations that occur when the microorganism is growing naturally in a normal environment are called "spontaneous mutations." The main causes of spontaneous mutations are thought to be errors during DNA replication and endogenous mutagens (nucleotide analogs) (Maki, "Spontaneous Mutations and Repair Mechanisms," Saibo Kagaku (Cell Technology), Vol. 13 No. 8, pp. 663-672, 1994).

### (2) Artificial mutation

### 2-1. Treatments using radiation and mutagens

DNA is damaged by ultraviolet light, X-rays, and other radiation treatments, or by treatment with artificial mutagens such as alkylating agents. This damage is fixed as mutations during the process of DNA repair.

### 2-2. Using PCR (polymerase chain reaction) methods

Due to the fact that PCR amplifies the DNA within a test tube, part of the mechanism for inhibiting mutation within the cell will be lacking, and a high frequency of mutation can be induced. By combining PCR and the gene-shuffling method (Stemmer, "Rapid evolution of a protein in vitro by DNA shuffling," Nature Vol. 370, pp. 389-391, Aug. 1994), the accumulation of damaging mutations can be avoided, and a plurality of advantageous mutations can accumulate in the genes.

### 2-3. Use of mutators

The rate of occurrence of spontaneous mutations is held to an extremely low level in almost all organisms due to a mechanism for inhibiting mutation. The mechanism for inhibiting mutation has a plurality of stages involving the participation of 10 or more types of genes. Mutations occur at a high frequency in individuals in which one or a plurality of these genes is destroyed. These individuals are therefore called "mutators." These genes are called "mutator genes" (Maki, "Spontaneous Mutations and Repair Mechanisms," Saibo Kagaku (Cell Technology), Vol. 13 No. 8, pp. 663-672, 1994; Horst et al., "Escherichia coli mutator genes," Trends in Microbiology Vol. 7 No. 1, pp. 29-36, Jan. 1999).

"Transformants" in the present invention refers to strains in which genes of another type of organism (foreign genes) are artificially introduced into novel microorganisms (Geotrichum sp. SAM2421 (international deposit number FERM BP-10300)) or variants thereof. The manufacturing process involves, e.g., integrating foreign genes into an appropriate expression vector and introducing the expression vector using an electroporation method, a calcium phosphate method, a liposome method, a DEAE dextran method, or another well-known method.

When using a dried microorganism, rehydration can be performed according to the method appropriate for each case. For example, when using dried yeast, the yeast can be used after being soaked for 20 to 30 minutes in water heated to 37 to 41°C.

The amount of the microorganism to be used in the present invention is not particularly limited as long as the effect of added flavor and aroma is obtained, but the amount should be set while taking into consideration the culturing time and cost. Appropriate amounts per [unit] weight of green coffee beans are, e.g., 1.0 × 10⁸ cells/g to 1.0 × 10¹⁰ cells/g for yeast and lactic-acid bacteria, and 1.0 mg/g to 10 mg/g for Deuteromycota.

### (Acetic-acid Producing Microorganisms)

Examples of acetic-acid producing microorganisms (acetic-acid producing bacteria) in the present invention include acetic-acid bacteria of the genus Gluconacetobacter and the genus Acetobacter that have the ability to oxidize alcohols, but acetic-acid producing microorganisms in the present invention are not limited thereto and also include microorganisms capable of producing primarily acetic acid, but also other organic acids (e.g., citric acid, succinic acid, and malic acid), alcohols, and various other organic compounds.

### (pH-Regulating Step)

The pH range that is capable of inhibiting the growth of acetic-acid producing microorganisms when bringing the fermenting microorganism into contact with the nutritive substance in the fermenting step of the present invention is pH 2.4 to 4.7 Therefore, the pH is regulated using a pH-regulating agent when the environment in which the nutritive substance and the fermenting microorganism are to be brought into contact with one another is not within this pH range.
Examples of pH-regulating agents include citric acid, malic acid, lactic acid, phosphoric acid, and other acids, but lactic acid or phosphoric acid is preferable. Other pH-regulating agents may involve the use of salts of these acids or of buffer solutions containing these acids and their salts.
The pH-regulating step may be implemented before or after the nutritive substance and the fermenting microorganism are brought into contact with one another. The pH-regulating step is preferably implemented before the nutritive substance and the fermenting microorganism are brought into contact with one another, whereby the fermenting step can be initiated in a state in which the growth of contaminating bacteria is limited from the initiation of contact between the nutritive substance and the fermenting microorganism.

### (Fermenting Step)

### 1. Method for bringing the microorganism and the nutritive substance into contact

Examples of methods for bringing the microorganism and the nutritive substance into contact in the fermenting step of the present invention are given below.

### (a) Direct method

The direct method involves bringing the microorganism into direct contact with the nutritive substance in the presence of the green coffee beans. Direct contact and fermentation are implemented when, e.g., a suspension, which has the fermenting microorganism suspended in water that has been regulated to the growth-inhibiting pH using the pH-regulating agent, is sprayed or sprinkled on coffee cherry in which the surface has been damaged using a knife or the like and a part of the coffee pulp has been exposed (or, alternatively, on a mixture of green coffee beans and coffee pulp obtained when separating out the green coffee beans in the refining step). Alternatively, a suspension is prepared in which the fermenting microorganism is suspended at a small concentration in a relatively large amount of water (e.g., an amount corresponding to approximately the same weight as the coffee cherry), the pH-regulating agent is added to the suspension, and the pH of the suspension is regulated to the growth-inhibiting pH. The coffee cherry to be fermented is then immersed in and removed from the suspension and thereby brought into contact [with the fermenting microorganism], after which fermentation is performed.

Particularly when fermentation is performed using coffee cherry in which part of the pulp is exposed, the microorganism readily infiltrates the coffee cherry from the exposed portions. The metabolized sugars and the like are localized in the pulp at high concentrations, and therefore fermentation proceeds efficiently, and the green coffee beans are present in close proximity, allowing the alcohols, esters, and other fermented components produced by fermentation to be rapidly transferred into the green coffee beans. Fermentation may also be performed with an appropriate amount of water when using dried coffee cherry (or dried coffee pulp).

### (b) Indirect method

The indirect method involves preparing a fermentation vat provided with a fermentation liquid that is regulated to the growth-inhibiting pH using the pH-regulating agent. The green coffee beans, the nutritive substance, and the fermenting microorganism are added to the fermentation solution, and the fermenting microorganism is brought into contact with the nutritive substance that dissolves into the fermentation liquid. For example, the fermenting microorganism and coffee cherry in which the surface has been damaged using a knife or the like and a part of the coffee pulp has been exposed (or, alternatively, a mixture of green coffee beans and coffee pulp obtained when separating out the green coffee beans in the refining step) are added to a fermentation liquid that has already been regulated to the growth-inhibiting pH, and fermentation is performed. The pulp is exposed in this instance, and therefore the sugars and the like in the pulp will readily dissolve into the fermentation liquid, and fermentation by the fermenting microorganism will be facilitated.

### 2. Fermentation conditions

The fermentation conditions of the microorganism are not particularly limited as long as conditions in which the nutritive substance and the fermenting microorganism are brought into contact in the pH range for inhibiting the growth of acetic-acid producing microorganisms can be fulfilled, at least temporarily (e.g., after the pH has been regulated to the relevant range, the present step is initiated; or the pH is regulated to the relevant range during the period in which fermented components are being actively produced). Conditions appropriate for fermentation (e.g., the type and amount (the initial number of cells) of microorganism used, the type and amount (concentration) of the nutritive substance, the temperature, the humidity, the concentration of oxygen or carbon dioxide, and the fermentation time) can be set appropriately as necessary. Besides the aforementioned nutritive substance, additional commercial nutrient media or the like may also be added as necessary as supplements for supplying sources of, e.g., nitrogen and carbon.

In order to prevent contamination with bacteria (including acetic-acid producing bacteria) in the fermenting step of the present invention, fermentation may also be performed while controlling conditions such as temperature, carbon dioxide concentration, and like individually or in any appropriate combination so as to limit the growth of contaminating bacteria. For example, fermentation may be performed in a low-temperature environment of 15 to 30°C, or the concentration of carbon dioxide (or the concentration of oxygen) may be raised and fermentation implemented under more anaerobic (or more aerobic) conditions.

The fermenting step of the present invention may also be performed using equipment or apparatuses (e.g., constant-temperature vats, tanks, and containers) that allow automatic and/or manual control of the aforementioned fermentation conditions (e.g., the type and amount (the initial number of cells) of microorganism used, the type and amount (concentration) of the nutritive substance, the temperature, the humidity, the pH, the concentration of oxygen or carbon dioxide, and the fermentation time).

The time required for the fermenting step is not limited but should be appropriately selected according to the type and strength of the added flavor and aroma or according to the microorganism and the nutritive substance. The depletion of nutritive substance may also be used as an indication for ending the fermenting step.

The fermenting step may be ended by implementing heat sterilization, "Washed", sun drying, separation of the nutritive substance and the green coffee beans, roasting, or other treatments alone or in any desired combination. When using, e.g., a drier, drying is performed at 50 to 60°C for approximately 1 to 3 days, whereby fermentation can be ended.

Microorganisms (two or more types of microorganism may be selected and used simultaneously) and fermentation conditions are all appropriately selected and combined as desired in the present invention, whereby a variety of flavors and aromas can be added to the green coffee beans.

### 3. Example fermenting step

An example of fermentation using coffee cherry will now be described.
The present invention may comprise performing the fermenting step during the refining step of the green coffee beans.

"Natural" step involves, e.g., harvesting the coffee cherry, bringing the coffee cherry into contact with the fermenting microorganism using the aforedescribed direct method, performing fermentation, and then drying.

"Washed" step involves, e.g., harvesting the coffee cherry, immersing the coffee cherry in a vat of water and removing impurities while using an appropriate pH-adjusting agent to adjust the pH of the water in the vat to the growth-inhibiting pH, using the aforedescribed indirect method to add the fermenting microorganism and the coffee cherry to the vat of water (fermentation vat), and performing fermentation.

The present invention may also comprise performing fermentation using the direct method to expose the pulp when the coffee cherry is still living on the tree before harvesting.

After the fermenting step has ended, the fermenting microorganism is washed away and separated from the coffee cherry using water or the like, after which the pulp is removed according to a normal refining step, the cherry is stripped, and the green coffee beans are separated out. The pulp may also be removed with the fermenting microorganism still attached.

The green coffee beans that have been thus separated may be roasted using normal methods. Roasted coffee beans can be obtained having a variety of different degrees of roasting (from light to Italian roasting).

The resulting roasted coffee beans are ground and soaked with water, which is then extracted through filtration by a filtering material. The resulting liquid can be provided as regular coffee for consumption or can be used as an industrial raw material for instant coffee, coffee extracts, canned coffee, or the like.

The present invention will be described in more detail below using examples.

### Example 1

The effects of adding lactic acid were investigated when using must (the raw material liquid for brewing wine) as the nutritive substance.
A concentrated solution of Chilean red grapes was diluted in water in a conical flask having a volume of 2000 mL, and 1000 g of a red must having a specific gravity of 1.084 (15°C) was added. The pH of the resulting red must liquid was 5.0. The pH reached 4.0 when an amount of 730 ppm of lactic acid was added to this liquid (Sample 1). A red must liquid to which lactic acid was not added was prepared as a control (Comparative Example 1).
Geotrichum sp. SAM2421 (international deposit number FERM BP-10300; "SAM2421") having a dry weight of 0.1 g was used as the fermenting microorganism and was rehydrated and added according to standard methods. 300 g of green coffee beans (Santos No. 2, made in Brazil) were then added, and the mixture was left to stand and ferment for 72 hours at 23°C.
Observations of the fermentation liquid after 72 hours showed that, in the sample (Sample 1) to which lactic acid was added, growth of organisms other than SAM2421 was not apparent, and the fermentation liquid presented a favorable aroma.

On the other hand, the growth of microorganisms thought to be contaminating bacteria was seen in the final phase of fermentation of the sample (Comparative Example 1) obtained by the same method, except that lactic acid was not added. A slightly acidic smell was recognized in addition to the favorable brewed aroma.

The supernatant of the resulting fermentation liquid was then sampled and subjected to component analysis. Since acetic-acid producing bacteria are representative of the contaminating bacteria that have adverse effects on the quality of coffee beans, the concentration of acetic acid in the supernatant was analyzed using liquid chromatography, and a determination was made as to whether or not acetic-acid producing bacteria were growing (i.e., a judgment was made as to whether the amount of acetic acid production and the concentration of acetic acid increased during the growth of acetic-acid producing bacteria). In addition, pyruvic acid, which is a fermented component, was used as a marker for determining the quality of growth of SAM2421. The concentration of pyruvic acid in the supernatant was measured and evaluated using liquid chromatography (i.e., a judgment was made as to whether the amount of pyruvic acid production and the concentration of pyruvic acid increased during the growth of SAM2421).
The apparatus used for liquid chromatography was an HPLC-type apparatus made by Shimadzu Corporation. A Shim-pack SCR-102H was used as the column, and detection was performed using an electrical-conductivity detector CDD-6A. The temperature of the column oven was 40°C, and reaction and elution were performed using a Tris buffer containing p-toluenesulfonic acid. Quantification was carried out using an absolute calibration curve. The results of the liquid chromatography are shown in Tables 1 and 2 below.

**[Table 1]**

| Compound | Sample 1 | Comparative Example 1 |
|---|---|---|
| Acetic acid (ppm) | 1100 | 1945 |

**[Table 2]**

| Compound | Sample 1 | Comparative Example 1 |
|---|---|---|
| Pyruvic acid (ppm) | 95 | 31 |

The sample to which lactic acid was added thus had a lower concentration of acetic acid and a higher concentration of pyruvic acid than the comparative example. In other words, it was seen that the growth of contaminating bacteria is limited, and the growth and fermentation of intentionally added microorganisms (fermenting microorganisms) is promoted by adding lactic acid to the fermentation liquid.

The roasted coffee beans were evaluated next. The green coffee beans were retrieved from the fermentation liquid after fermentation and discarded. Solids were then washed away and thereby removed using an equivalent amount of deionized water, and approximately 300 g of green coffee beans was obtained. 100 g of the resulting green coffee beans was roasted by pressing the deep-roast button on a completely automatic home coffee-bean roaster (a CRPA-100 made by Tortoise Co., Ltd.). The roasting time was approximately 25 minutes. A sensory evaluation was then performed on the roasted coffee beans by a panel of five specialists in coffee evaluation. 30 g of the roasted coffee beans of both Sample 1 and Comparative Example 1 were put into specialized sampling glasses in their original, unground form, and the glasses were covered. The covers were removed at the time of the sensory evaluation, and an evaluation was made for two types of aroma, i.e., an estery aroma and an acetic-acid smell. Evaluations were made in increments of 0.5 using five levels: weak (1), somewhat weak (2), moderate (3), somewhat strong (4), and strong (5). The results, which are expressed as the average values of the five evaluations, are shown in Table 3. The roasted coffee beans of Sample 1 had a more favorable aroma than that of Comparative Example 1.

**[Table 3]**

| Evaluation | | Sample 1 | Comparative Example 1 |
|---|---|---|---|
| Aroma | Estery aroma | 3.8 | 3.5 |
| | Acetic-acid smell | 3.5 | 4.0 |

Coffee extracts were prepared using the roasted coffee beans of Sample 1 and Comparative Example 1. The roasted coffee beans were finely ground. 100 g of hot water was added to and stirred with 12 g of ground beans. The coffee that floated to the top was removed, and a sensory evaluation was performed on the supernatant fluid in accordance with a standard cup-test method. The sensory evaluation was performed by a panel of five coffee specialists. There were four categories of evaluation: aroma (estery aroma and brewed aroma) and taste (body and acidity). The evaluation was from extremely weak (1) to extremely strong (5) in increments of 0.1. The results, which are expressed as the average values of the five evaluations, are shown in Table 4. The coffee extract of Example 1 had a more favorable aroma and taste than that of Comparative Example 1.

**[Table 4]**

| Evaluation | | Sample 1 | Comparative Example 1 |
|---|---|---|---|
| Aroma | Estery aroma | 4.0 | 3.5 |
| | Brewed aroma | 4.2 | 3.1 |
| Taste | Body | 4.0 | 3.5 |
| | Acidity | 2.2 | 3.5 |

### Example 2

An investigation was performed on the effects of adding lactic acid when using coffee cherry. 1000 g of coffee cherry (grown in Okinawa Prefecture) was introduced into a conical flask having a volume of 5000 mL, and 1000 mL of water was added. The pH at this point was 5.5. An amount of 3000 ppm of lactic acid was added to the resulting mixture, and the pH was adjusted to 2.6 (Sample 2). A mixture to which lactic acid was not added was prepared as a control (Comparative Example 2).

Geotrichum sp. SAM2421 (international deposit number FERM BP-10300) having a dry weight of 1 g was used as the fermenting microorganism and was rehydrated and added according to standard methods. The mixture was left to stand and ferment for 72 hours at 23°C. Observations of the fermentation liquid after 72 hours showed that, in the sample (Sample 2) to which lactic acid was added, growth of organisms other than SAM2421 was not apparent, and the fermentation liquid presented a favorable aroma.

On the other hand, the growth of microorganisms thought to be contaminating bacteria was seen in the final phase of fermentation of the sample (Comparative Example 2) obtained by the same method, except that lactic acid was not added. A slightly acidic smell was recognized in addition to the favorable brewed aroma.

The supernatant of the resulting fermentation liquid was then sampled over time (at 24 hours, 48 hours, and 72 hours) and subjected to component analysis.
Since acetic-acid producing bacteria are representative of the contaminating bacteria that have adverse effects on the quality of coffee beans, as in Example 1, the concentration of acetic acid in the supernatant was analyzed using liquid chromatography, and a determination was made as to whether or not acetic-acid producing bacteria were growing. In addition, pyruvic acid, which is a fermented component, was used as a marker for determining the quality of growth of SAM2421. The concentration of pyruvic acid in the supernatant was measured and evaluated using liquid chromatography.
The apparatus used for liquid chromatography analysis was an HPLC-type apparatus made by Shimadzu Corporation. A Shim-pack SCR-102H was used as the column, and detection was performed using an electrical-conductivity detector CDD-6A. The temperature of the column oven was 40°C, and reaction and elution were performed using a Tris buffer containing p-toluenesulfonic acid. Quantification was carried out using an absolute calibration curve. The results of the liquid chromatography are shown in Tables 5 and 6 below.

**[Table 5]**

| Fermentation time | Concentration of acetic acid (ppm) | |
|---|---|---|
| | Sample 2 | Comparative Example 2 |
| 24 hours | 50 | 171 |
| 48 hours | 296 | 599 |
| 72 hours | 1877 | 3372 |

**[Table 6]**

| Fermentation time | Concentration of pyruvic acid (ppm) | |
|---|---|---|
| | Sample 2 | Comparative Example 2 |
| 24 hours | 21 | 6 |
| 48 hours | 55 | 16 |
| 72 hours | 61 | 35 |

The sample to which lactic acid was added thus had a lower concentration of acetic acid and a higher concentration of pyruvic acid than the comparative example. In other words, it was seen that the growth of contaminating bacteria is limited, and the growth and fermentation of intentionally added microorganisms (fermenting microorganisms) is promoted by adding lactic acid to the fermentation liquid.

The roasted coffee beans were evaluated next. The coffee cherry was retrieved from the fermentation liquid after fermentation, discarded, and then dried for 48 hours at 55°C using a drier. The pulp and skin were then removed using a pulping machine, and approximately 250 g of green coffee beans was obtained. 100 g of the resulting green coffee beans was roasted by pressing the deep-roast button on a completely automatic home coffee-bean roaster (a CRPA-100 made by Tortoise Co., Ltd.). The roasting time was approximately 25 minutes.

A sensory evaluation was then performed on the roasted coffee beans by a panel of five specialists in coffee evaluation. 30 g of the roasted coffee beans of both Sample 2 and Comparative Example 2 were put into specialized sampling glasses in their original, unground form, and the glasses were covered. The covers were removed at the time of the sensory evaluation, and an evaluation was made for two types of aroma, i.e., an estery aroma and an acetic-acid smell. Evaluations were made in increments of 0.5 using five levels: weak (1), somewhat weak (2), moderate (3), somewhat strong (4), and strong (5). The results, which are expressed as the average values of the five evaluations, are shown in Table 7. The roasted coffee beans of Sample 2 had a more favorable aroma than that of Comparative Example 2.

**[Table 7]**

| Evaluation | | Sample 2 | Comparative Example 2 |
|---|---|---|---|
| Aroma | Estery aroma | 4.0 | 3.8 |
| | Acetic-acid smell | 3.2 | 3.8 |

Coffee extracts were prepared using the roasted coffee beans of Sample 2 and Comparative Example 2. The roasted coffee beans were finely ground. 100 g of hot water was added to and stirred with 12 g of ground beans. The coffee that floated to the top was removed, and a sensory evaluation was performed on the supernatant fluid in accordance with a standard cup-test method. The sensory evaluation was performed by a panel of five coffee specialists. There were four categories of evaluation: aroma (estery aroma and brewed aroma) and taste (body and acidity). The evaluation was from extremely weak (1) to extremely strong (5) in increments of 0.1. The results, which are expressed as the average values of the five evaluations, are shown in Table 8. The coffee extract of Sample 2 had a more favorable aroma and taste than that of Comparative Example 2.

**[Table 8]**

| Evaluation | | Sample 2 | Comparative Example 2 |
|---|---|---|---|
| Aroma | Estery aroma | 4.2 | 3.5 |
| | Brewed aroma | 4.5 | 3.3 |
| Taste | Body | 4.5 | 3.5 |
| | Acidity | 2.5 | 4.0 |

### Example 3

The effect of adding lactic acid was verified when using frozen coffee cherry grown in Mexico. A commercial dried wine yeast was used as the fermenting microorganism and was fermented using the direct method. 15 g of the dried wine yeast (Lalvin L2323, purchased from the Sceti Company), was rehydrated, activated, and then inoculated into 1000 mL of water. Next, 1 kg of the thawed Mexican coffee cherry was added and brought into contact with the yeast. The coffee cherry was then separated from the fermentation solution using a strainer, moved to a bottle having a volume of 2 L, and let to stand. Fermentation was performed for three days. A mixture (Sample 3) in which 3000 mg of lactic acid was added to the fermentation solution (1 L) was used as an experimental batch for verifying [the effect of] the addition of lactic acid. The pH of the fermentation solution after the addition of the coffee cherry was 5.8 in the mixture to which lactic acid was not added (Comparative Example 3) and 4.7 in the mixture to which 3000 ppm of lactic acid was added (Sample 3).
The amount of lactic acid contained the pulp of the coffee cherry obtained in Comparative Example 3 and Sample 3 at the end of fermentation was evaluated.
The pulp was removed from the coffee cherry (3 to 5 pieces) obtained in Comparative Example 3 and Sample 3 after fermentation ended. Juice squeezed from the pulp was diluted in water by a factor of 20, and a diluted fruit-juice solution was prepared. The concentration (ppm) of acetic acid in the diluted fruit-juice solution was then measured using liquid chromatography.
The apparatus used for liquid chromatography analysis was an HPLC-type apparatus made by Shimadzu Corporation. A Shim-pack SCR-102H was used as the column, and detection was performed using an electrical-conductivity detector CDD-6A. The temperature of the column oven was 40°C, and reaction and elution were performed using a Tris buffer containing p-toluenesulfonic acid. Quantification was carried out using an absolute calibration curve.

**[Table 9]**

| Compound | Comparative Example 3 | Sample 3 |
|---|---|---|
| Acetic acid (ppm) | 12710 | 1267 |

The amount of acetic acid production and the amount of acetic acid contained in the pulp will increase when acetic-acid producing bacteria (representative of the contaminating bacteria that have adverse effects on the quality of coffee beans) grow within the coffee cherry. As a result, the concentration of acetic acid in the juice will increase. The concentration of acetic acid in the pulp of Comparative Example 3 was extremely high in comparison with the concentration of acetic acid in the pulp of Sample 3. It can therefore be seen that the growth of acetic-acid producing bacteria is inhibited in Sample 3 in this instance, as well.

The roasted coffee beans were evaluated next. A pulping machine was used to remove the pulp and skin from the aforedescribed coffee cherry after fermentation, and approximately 250 g of green coffee beans was obtained. 100 g of the resulting green coffee beans was roasted by pressing the deep-roast button on a completely automatic home coffee-bean roaster (a CRPA-100 made by Tortoise Co., Ltd.). The roasting time was approximately 25 minutes. A sensory evaluation was then performed on the roasted coffee beans by a panel of five specialists in coffee evaluation. 30 g of the roasted coffee beans of both Sample 3 and Comparative Example 3 were put into specialized sampling glasses in their original, unground form, and the glasses were covered. The covers were removed at the time of the sensory evaluation, and an evaluation was made for two types of aroma, i.e., an estery aroma and an acetic-acid smell. Evaluations were made in increments of 0.5 using five levels: weak (1), somewhat weak (2), moderate (3), somewhat strong (4), and strong (5). The results, which are expressed as the average values of the five evaluations, are shown in Table 10. The roasted coffee beans of Sample 3 had a more favorable aroma than that of Comparative Example 3.

**[Table 10]**

| Evaluation | Comparative Example 3 | Sample 3 |
|---|---|---|
| Estery aroma | 3.0 | 3.8 |
| Acetic-acid smell | 4.5 | 3.5 |

Coffee extracts were prepared using the roasted coffee beans of Comparative Example 3 and Sample 3. The roasted coffee beans were finely ground. 100 g of hot water was added to and stirred with 12 g of ground beans. The coffee that floated to the top was removed, and a sensory evaluation was performed on the supernatant fluid in accordance with a standard cup-test method. The sensory evaluation was performed by a panel of five coffee specialists. There were four categories of evaluation: aroma (estery aroma and brewed aroma) and taste (body and acidity). The evaluation was from extremely weak (1) to extremely strong (5) in increments of 0.1. The results, which are expressed as the average values of the five evaluations, are shown in Table 11. The coffee extract of Sample 3 had a more favorable aroma and taste than that of Comparative Example 3.

**[Table 11]**

| Evaluation | Comparative Example 3 | Sample 3 |
|---|---|---|
| Estery aroma | 3.2 | 3.8 |
| Brewed aroma | 3.5 | 4.5 |
| Body | 3.0 | 3.5 |
| Acidity | 4.5 | 3.5 |

### Example 4

An investigation was performed on the effects of adding phosphoric acid when using coffee cherry. 1000 g of coffee cherry (grown in Okinawa Prefecture) was introduced into a conical flask having a volume of 3000 mL, and 1000 mL of water was added. The pH at this point was 5.5. An amount of 3000 ppm of phosphoric acid was added to the resulting mixture, and the pH was adjusted to 2.4 (Sample 4). A mixture to which phosphoric acid was not added was prepared as a control (Comparative Example 4).
Geotrichum candidum IAM12700 (purchased from the Institute of Molecular and Cellular Biosciences at the University of Tokyo; "IAM12700") having a dry weight of 1 g was used as the fermenting microorganism and was rehydrated and added according to standard methods. The mixture was left to stand and ferment for 72 hours at 23°C. Observations of the fermentation liquid after 72 hours showed that, in the sample to which phosphoric acid was added, growth of organisms other than IAM12700 was not apparent, and the fermentation liquid presented a favorable aroma.
On the other hand, the growth of microorganisms thought to be contaminating bacteria was seen in the final phase of fermentation of the sample (Comparative Example 4) obtained by the same method, except that phosphoric acid was not added. A slightly acidic smell was recognized in addition to the favorable brewed aroma.
The supernatant of the resulting fermentation liquid was then sampled, and the ultimate composition of the liquid was analyzed. Since acetic-acid producing bacteria are representative of the contaminating bacteria that have adverse effects on the quality of coffee beans, as in Example 1, the concentrations of phosphoric acid and acetic acid in the supernatant were analyzed using liquid chromatography, and a determination was made as to whether or not acetic-acid producing bacteria were growing.
The apparatus used for liquid chromatography analysis was an HPLC-type apparatus made by Shimadzu Corporation. A Shim-pack SCR-102H was used as the column, and detection was performed using an electrical-conductivity detector CDD-6A. The temperature of the column oven was 40°C, and reaction and elution were performed using a Tris buffer containing p-toluenesulfonic acid. Quantification was carried out using an absolute calibration curve. The results of the liquid chromatography are shown in Table 12.

**[Table 12]**

| Compound | Comparative Example 4 | Sample 4 |
|---|---|---|
| Phosphoric acid (ppm) | 351 | 1666 |
| Acetic acid (ppm) | 1827 | 1079 |

It is thus seen that the growth of contaminating bacteria was limited in the sample (Sample 4) to which phosphoric acid was added, and that the concentration of acetic acid was lower (i.e., the amount of acetic acid production was lower) in Sample 4 than in Comparative Example 4.

The roasted coffee beans were evaluated next. The coffee cherry was retrieved from the fermentation liquid after fermentation, discarded, and then dried for 48 hours at 55°C using a drier. The pulp and skin were then removed using a pulping machine, and approximately 250 g of green coffee beans was obtained. 100 g of the resulting green coffee beans was roasted by pressing the deep-roast button on a completely automatic home coffee-bean roaster (a CRPA-100 made by Tortoise Co., Ltd.). The roasting time was approximately 25 minutes. A sensory evaluation was then performed on the roasted coffee beans by a panel of five specialists in coffee evaluation. 30 g of the roasted coffee beans of both Comparative Example 4 and Sample 4 were put into specialized sampling glasses in their original, unground form, and the glasses were covered. The covers were removed at the time of the sensory evaluation, and an evaluation was made for two types of aroma, i.e., an estery aroma and an acetic-acid smell. Evaluations were made in increments of 0.5 using five levels: weak (1), somewhat weak (2), moderate (3), somewhat strong (4), and strong (5). The results, which are expressed as the average values of the five evaluations, are shown in Table 13. The roasted coffee beans of Sample 4 had a more favorable aroma than that of Comparative Example 4.

**[Table 13]**

| Evaluation | Comparative Example 4 | Sample 4 |
|---|---|---|
| Estery aroma | 3.5 | 3.8 |
| Acetic-acid smell | 4.0 | 3.5 |

Coffee extracts were prepared using the roasted coffee beans of Comparative Example 4 and Sample 4. The roasted coffee beans were finely ground. 100 g of hot water was added to and stirred with 12 g of ground beans. The coffee that floated to the top was removed, and a sensory evaluation was performed on the supernatant fluid in accordance with a standard cup-test method. The sensory evaluation was performed by a panel of five coffee specialists. There were four categories of evaluation: aroma (estery aroma and brewed aroma) and taste (body and acidity). The evaluation was from extremely weak (1) to extremely strong (5) in increments of 0.1. The results, which are expressed as the average values of the five evaluations, are shown in Table 14. The coffee extract of Sample 4 had a more favorable aroma and taste than that of Comparative Example 4.

**[Table 14]**

| Evaluation | Comparative Example 4 | Sample 4 |
|---|---|---|
| Estery aroma | 3.5 | 4.5 |
| Brewed aroma | 3.0 | 3.0 |
| Body | 2.0 | 3.5 |
| Acidity | 4.0 | 3.5 |

### INDUSTRIAL APPLICABILITY

The present invention is extremely useful as the beginning of operations for processing coffee cherry, e.g., for refining and roasting, as well as for operations for manufacturing coffee drinks in which a variety of products (regular coffee, instant coffee, canned coffee, coffee aroma, and the like) are manufactured after roasting green coffee beans treated using the present invention. The present invention also contributes to the further development of such industries.

## Claims

1. A method of treating green coffee beans, comprising:
a fermenting step for performing fermentation by bringing a nutritive substance and a fermenting microorganism into contact with one another and then supplying the fermented components thus formed to green coffee beans, wherein
in the fermenting step, with using at least one from among lactic acid and phosphoric acid as a pH-regulating agent, a pH range is regulated to a pH range of pH 2.4 to 4.7 for inhibiting the growth of acetic-acid producing microorganisms and the nutritive substance and the fermenting microorganism are brought into contact with one another.

2. The method of treating green coffee beans according to claim 1, wherein the green coffee beans are in at least one state from among a state of isolation from coffee cherry or a state of being inside the coffee cherry.

3. The method of treating green coffee beans according to claim 1 or 2, wherein the fermenting microorganism is of at least one type selected from among the group composed of yeast, lactic acid bacteria, and Deuteromycota.

4. The method of treating green coffee beans according to claim 3, wherein the yeast is a wine-fermenting yeast.

5. The method of treating green coffee beans according to claim 3, wherein the Deuteromycota belongs to the genus Geotrichum.

6. The method of treating green coffee beans according to claim 5, wherein the Deuteromycota belonging to the genus Geotrichum is Geotrichum sp. SAM2421 (international deposit number FERM BP-10300), a variant thereof, or a transformant thereof.

7. The method of treating green coffee beans according to claim 1 or 2, wherein the nutritive substance is fruit juice or coffee pulp.

## Patentansprüche

1. Ein Verfahren zur Behandlung grüner Kaffeebohnen, umfassend:
einen Fermentationsschritt zur Durchführung von Fermentation durch miteinander in Kontakt bringen einer Nährsubstanz und einem Fermentationsmikroorganismus und anschließendes Zuführen der so gebildeten, fermentierten Bestandteile zu grünen Kaffeebohnen, wobei
in dem Fermentationsschritt durch Verwenden von mindestes einem von Milchsäure und Phosphorsäure als ein pH-regulierendes Mittel, ein pH-Bereich zur Verhinderung des Wachstums von Essigsäure produzierenden Mirkoorganismen auf einen pH-Bereich von pH 2,4 bis 4,7 eingestellt wird und die Nährsubstanz und der Fermentationsmikroorganismus miteinander in Kontakt gebracht werden.

2. Das Verfahren zur Behandlung grüner Kaffeebohnen nach Anspruch 1, wobei die grünen Kaffeebohnen sich in mindestens einem Zustand, ausgewählt aus dem Zustand der Isolation von der Kaffeekirsche oder einem Zustand innerhalb der Kaffeekirsche, befinden.

3. Das Verfahren zur Behandlung grüner Kaffeebohnen nach Anspruch 1 oder 2, wobei der Fermentationsmikroorganismus mindestens einer, ausgewählt aus der Gruppe bestehend aus Hefe, Milchsäurebakterien und Deuteromycota, ist.

4. Das Verfahren zur Behandlung grüner Kaffeebohnen nach Anspruch 3, wobei die Hefe eine Wein fermentierende Hefe ist.

5. Das Verfahren zur Behandlung grüner Kaffeebohnen nach Anspruch 3, wobei der Deuteromycota zu der Gattung Geotrichum gehört.

6. Das Verfahren zur Behandlung grüner Kaffeebohnen nach Anspruch 5, wobei der Deuteromycota, welcher zu der Gattung Geotrichum gehört, Geotrichum sp. SAM2421 1 (internationale Hinterlegungsnummer FERM BP-10300), eine Variante davon oder ein Transformant davon ist.

7. Das Verfahren zur Behandlung grüner Kaffeebohnen nach Anspruch 1 oder 2, wobei die Nährsubstanz Fruchtsaft oder Kaffeepulpe ist.

## Revendications

1. Méthode de traitement des grains de café verts comprenant :
une étape de fermentation pour réaliser une fermentation en mettant en contact une substance nutritive et un microorganisme fermenteur l'un avec l'autre et ensuite en fournissant les composés fermentés ainsi formés aux grains de café verts, dans laquelle
dans l'étape de fermentation, en utilisant au moins un composé parmi l'acide lactique et l'acide phosphorique en tant qu'agent régulant le pH, une gamme de pH est régulée dans une gamme de pH de pH 2,4 à 4,7 afin d'inhiber la croissance des micro-organismes producteurs d'acide-acétique et la substance nutritive et le microorganisme fermenteur sont mis en contact l'un avec l'autre.

2. Méthode de traitement des grains de café verts selon la revendication 1, dans laquelle les grains de café verts sont au moins dans un état parmi un état d'isolement à partir d'une cerise de café ou un état à l'intérieur d'une cerise de café.

3. Méthode de traitement des grains de café verts selon la revendication 1 ou 2, dans laquelle le microorganisme fermenteur est au moins d'un type choisi parmi le groupe composé d'une levure, des bactéries lactiques, et d'un Deuteromycota.

4. Méthode de traitement des grains de café verts selon la revendication 3, dans laquelle la levure est une levure de fermentation du vin.

5. Méthode de traitement des grains de café verts selon la revendication 3, dans laquelle le Deuteromycota appartient au genre Geotrichum.

6. Méthode de traitement des grains de café verts selon la revendication 5, dans laquelle le Deuteromycota appartenant au genre Geotrichum est Geotrichum sp. SAM2421 (Numéro de dépôt international FERM BP-10300), un variant de celui-ci ou un transformant de celui-ci.

7. Méthode de traitement des grains de café verts selon la revendication 1 ou 2, dans laquelle la substance nutritive est un jus de fruit ou une pulpe de café.
